# EUROPEAN PATENT SPECIFICATION

(11) **EP 3 006 099 B1**
(45) Date of publication and mention of the grant of the patent: **15.08.2018**
(21) Application number: 14807328.1
(22) Date of filing: 27.05.2014
(51) Int. Cl.: B01D 53/14, B01D 53/96, B01D 53/62, B01D 53/74

(54) **CARBON DIOXIDE SEPARATION DEVICE HAVING IMPROVED SENSIBLE HEAT RECOVERY EFFICIENCY USING PRESSURE REDUCTION AND PHASE SEPARATION**
KOHLENDIOXIDTRENNUNGSVORRICHTUNG MIT VERBESSERTER EFFIZIENZ BEI DER RÜCKGEWINNUNG FÜHLBARER WÄRME UNTER VERWENDUNG VON DRUCKREDUZIERUNG UND PHASENTRENNUNG
DISPOSITIF DE SÉPARATION DE DIOXYDE DE CARBONE PRÉSENTANT UNE EFFICACITÉ DE RÉCUPÉRATION DE CHALEUR APPRÉCIABLE AMÉLIORÉE À L'AIDE D'UNE RÉDUCTION DE PRESSION ET D'UNE SÉPARATION DE PHASES

(30) Priority: 04.06.2013 KR 20130064317
(43) Date of publication of application: 13.04.2016
(73) Proprietor: Kepco Engineering & Construction Company, Inc., Yongin-si, Gyeonggi-do 446-713 (KR)
(72) Inventor: LEE, ChiSeob, Seoul 110-460 (KR); CHO, Seong Pill, Yongin-si Gyeonggi-do 446-708 (KR); CHOI, Byung Ki, Yongin-si Gyeonggi-do 446-761 (KR); LEE, Yoo Jin, Yongin-si Gyeonggi-do 448-992 (KR); PARK, Jong Min, Seoul 151-894 (KR); YANG, Chang Ryung, Yongin-si Gyeonggi-do 449-925 (KR); KIM, Deok Ho, Seoul 138-801 (KR); HAN, Chong Hun, Seoul 137-870 (KR); JUNG, Jae Heum, Busan 612-712 (KR); JEONG, Yeong Su, Seoul 151-805 (KR)
(74) Representative: J A Kemp
(86) International application number: PCT/KR2014/004700
(87) International publication number: WO 2014/196757

(56) References cited:
- EP-A1- 2 455 154
- DE-A1-102011 108 749
- JP-A- 2005 270 814
- JP-A- 2013 022 514
- KR-A- 20110 114 189
- US-A1- 2009 158 930

## Description

The present invention relates to a carbon dioxide separation device having improved sensible heat recovery efficiency using pressure reduction and phase separation, particularly, to a carbon dioxide separation device having improved sensible heat recovery efficiency using pressure reduction and phase separation so that the sensible heat recovery efficiency is improved by separating a phase of a CO₂-rich-solution into gas and liquid by means of heat from a lean solution flowing from a stripping tower to an exchanger, when the CO₂-rich-solution is depressurized by a heat exchanger, and a part of the CO₂-rich-solution flows into the stripping tower before the CO₂-rich-solution flows into the heat exchanger so as to reduce a re-liquefaction ratio.

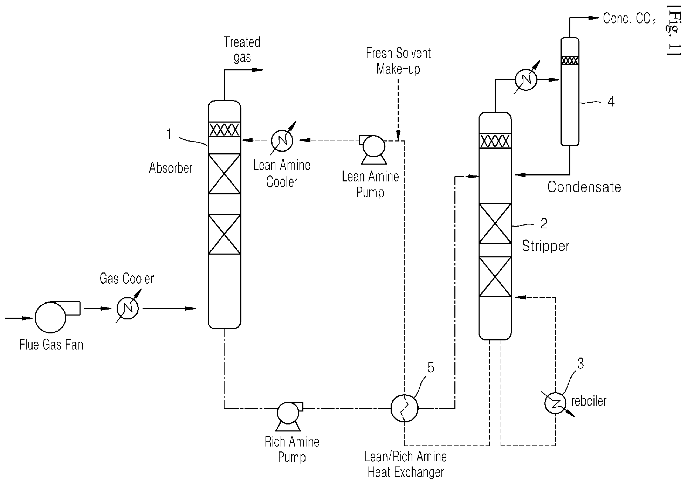

Since a liquid amine compound or liquid ammonia absorbs carbon dioxide, the liquid amine compound or the liquid ammonia may be used in a process of removing a sulfur ingredient in a petroleum refining process or a process of separating carbon dioxide from an exhaust gas discharged from a thermoelectric power plant. Carbon capture & storage (CCS) technology refers to technology of capturing, compressing, transporting, and storing carbon dioxide. Particularly, the liquid amine process is commercially available as a method of separating carbon dioxide from an exhaust gas discharged from a thermoelectric power plant. FIG. 1 is a schematic diagram of a liquid amine carbon capture and storage (CCS) process in a prior art.

As shown in FIG. 1, a basic structure of a liquid chemical absorption process using amine consists of an absorption tower 1 for contacting an amine absorbent with exhaust gas, a stripping tower 2 for stripping absorbed carbon dioxide, and a facility for pretreatment of the exhaust gas.

In a general capturing process, carbon dioxide (CO₂) reacts with an absorbent in the absorption tower 1, thus forming a CO₂-rich-solution (also referred to as rich solution), and then, the CO₂-rich-solution is delivered to the stripping tower 2. In the stripping tower 2, CO₂ is separated from the CO₂-rich-solution by heating and discharged to the upper part of the stripping tower 2 and, resultantly, a CO₂-lean-solution (also referred to as lean solution) is reproduced in the lower part of the stripping tower 2. In this case, heat is recovered as a result of a heat exchange between the CO₂-lean-solution and the CO₂-rich-solution by using the heat exchanger 5.

For example, if a liquid amine CCS technology is applied to a coal-fired power plant, exhaust gas passes through an exhaust gas desulfurization (DeSOx), NOx removal (DeNOx), and dust collection facility (which is an exhaust gas pretreatment facility), and then, flows into a CCS facility. Content of CO₂ in the exhaust gas varies depending on a combusted raw material or an operation condition. However, about 15 Vol.% of CO₂ is contained in the exhaust gas.

If the exhaust gas containing CO₂ flows into a lower part of the absorption tower 1, and a liquid absorbent is injected from an upper part of the absorption tower 1, the exhaust gas and the liquid absorbent flow in counter-current to each other and contact each other in a gas-liquid state, and thus, CO₂ is absorbed into the liquid absorbent. CO₂ is removed from the exhaust gas, and then, the exhaust gas from which CO₂ is removed is discharged to the upper part of the absorption tower 1, and a CO₂-rich-solution that is obtained after the CO₂ is absorbed into the liquid absorbent and is discharged to the lower part of the absorption tower 1.

Even though an exothermic reaction occurs in the absorption tower 1, a temperature of the CO₂-rich-solution is generally about 40 to 50°C. As the CO₂-rich-solution passes through the heat exchanger 5, the CO₂-rich-solution is heated to 90 to 100°C and flows into an upper part of the stripping tower 2. As the CO₂-rich-solution flows from an upper part to a lower part of the stripping tower 4, the CO₂-rich-solution is heated by heat energy. Then, CO₂ is separated from the CO₂-rich-solution, and the separated CO₂ is discharged to the upper part of the stripping tower 2. Since a temperature of a high concentration of CO₂, discharged to the upper part of the stripping tower 2, is nearly identical to that of the stripping tower 2 and contains high moisture content, moisture is separated from the high concentration of CO₂ by using a condenser 4. Separated moisture is recovered back to the stripping tower 2.

The CO₂-lean-solution, obtained when the CO₂ is separated from the CO₂-rich-solution, is discharged to the lower part of the stripping tower 2. In a process of separating the CO₂ from the CO₂-rich-solution, a part of an absorbent in the stripping tower 2 flows into a reheater 3 heated by vapor. The part of the absorbent in the reheater 3 produces vapor, and the vapor flows into the stripping tower 2 and is provided as heat energy for separating CO₂ from the CO₂-rich-solution.

Additionally, a liquid absorbent that remains after the vapor is produced in the reheater 3 also flows into the stripping tower 2, and helps to separate the CO₂ from the CO₂-rich-solution. A temperature of the CO₂-lean-solution discharged from the stripping tower 2 is about 105 to 115°C. The heat exchanger 5 exchanges heat between the CO₂-lean-solution and the CO₂-rich-solution, and then, the CO₂-lean-solution flows into the upper part of the absorption tower 1.

In a structure of sensible heat recovery between the absorption tower 1 and the stripping tower 2, if a temperature difference between the CO₂-rich-solution discharged from the lower part of the absorption tower 1 and the CO₂-lean-solution discharged from the lower part of the stripping tower 2 is great, sensible heat is exchanged between the two solutions by using the heat exchanger 5, and thus, sensible heat is recovered. The recovered sensible heat increases a temperature of the CO₂-rich-solution flowing into the stripping tower 2, and reduces a heat duty of the reheater 3 which is needed by the stripping tower 2.

As a temperature of the CO₂-rich-solution passing through the heat exchanger 5 and flowing into the stripping tower 2 is increased, sensible heat recovery is improved, and thus, injection of heat energy into the stripping tower 2 may be reduced. However, if a temperature of the upper part of the stripping tower 2 is increased, a cooling duty of the condenser 4 is also increased. In other words, a re-liquefaction ratio is increased. Here, a re-liquefaction ratio refers to a ratio of moles of liquid that is obtained as a result of liquefaction by the condenser 4 and flows into the stripping tower 2 compared to moles of gas discharged from the condenser 4. In other words, as shown in FIG. 1, the re-liquefaction ratio is a ratio of moles of condensate that is liquefied and flows into the stripping tower 4 compared to moles of CO₂ discharged from the condenser 4.

Accordingly, since a temperature of the CO₂-rich-solution flowing into the stripping tower 2 and a cooling duty of the condenser 4 is in a trade-off relation, the heat exchanger 5 may not constantly recover sensible heat.

Accordingly, there is a demand for a carbon dioxide separation device that may improve sensible heat recovery efficiency and reduce a re-liquefaction ratio.
The present invention originated from a national research and development project (research project name: Improvement of a CO₂ Capture Process and Development of Comprehensive Technology for a Power Plant, project identification number: 2010201020006D).

DE-102011108749, on which the two part form of claim 1 is based discloses a carbon dioxide separation device comprising: an absorption tower into which an exhaust gas flows and configured to cause carbon dioxide, included in the exhaust gas, and an absorbent to react with each other; a first piping through which a CO₂-rich-solution, obtained when the carbon dioxide and the absorbent reacted each other, moves; a pressure reduction and phase separation unit arranged on the first piping and configured to depressurize the CO₂-rich-solution, and cause heat exchange between a lean solution and the CO₂-rich-solution and separate a phase of the CO₂-rich-solution into gas and liquid; a stripping tower into which CO₂-rich-solution in a gas state and CO₂-rich-solution in the liquid state flow and configured to separate carbon dioxide from the CO₂-rich-solution; a second piping configured to connect the stripping tower to the pressure reduction and phase separation unit so that the lean solution, obtained when the carbon dioxide is separated from the CO₂-rich-solution, moves through the second piping; and a reheater configured to heat the stripping tower so that carbon dioxide is separated from the CO₂-rich-solution, wherein the lean solution flows into the pressure reduction and phase separation unit, and the CO₂-rich-solution undergoes a phase separation into gas and liquid due to heat of the lean solution, and then, flows into the stripping tower.

The present invention has been made to solve problems described above, and provides a carbon dioxide separation device having improved sensible heat recovery efficiency using pressure reduction and phase separation, so that the sensible heat recovery efficiency is improved by exchanging heat between a CO₂-rich-solution and a lean solution that flows from a stripping tower to a pressure reduction and phase separation unit, when the CO₂-rich-solution is depressurized, and separating a phase of the CO₂-rich-solution into gas and liquid and supplying the CO₂-rich-solution to the stripping tower, and a part of the CO₂-rich-solution is introduced into the stripping tower before the CO₂-rich-solution flows into the heat exchanger so as to reduce a re-liquefaction ratio.

According to the present invention as defined in claim 1, there is provided a carbon dioxide separation device comprising: an absorption tower into which an exhaust gas flows and configured to cause carbon dioxide, included in the exhaust gas, and an absorbent to react with each other; a first piping through which a CO₂-rich-solution, obtained when the carbon dioxide and the absorbent reacted each other, moves; a pressure reduction and phase separation unit arranged on the first piping and configured to depressurize the CO₂-rich-solution, and cause heat exchange between a lean solution and the CO₂-rich-solution and separate a phase of the CO₂-rich-solution into gas and liquid; a stripping tower into which CO₂-rich-solution in a gas state and CO₂-rich-solution in the liquid state flow and configured to separate carbon dioxide from the CO₂-rich-solution; a second piping configured to connect the stripping tower to the pressure reduction and phase separation unit so that the lean solution, obtained when the carbon dioxide is separated from the CO₂-rich-solution, moves through the second piping; and a reheater configured to heat the stripping tower so that carbon dioxide is separated from the CO₂-rich-solution, wherein the lean solution flows into the pressure reduction and phase separation unit, and the CO₂-rich-solution undergoes a phase separation into gas and liquid due to heat of the lean solution, and then, flows into the stripping tower, the CO₂-rich-solution changed into the gas state is repressurized by a compressor or a fan and flows into the stripping tower, the CO₂-rich-solution repressurized by the compressor or the fan flows into a lower part of the stripping tower, the CO₂-rich-solution having the phase separated into liquid is repressurized by a pump and flows into the stripping tower, and the CO₂-rich-solution repressurized by the pump flows into a center part of the stripping tower. According to the present invention, in a carbon dioxide separation device having improved sensible heat recovery efficiency using pressure reduction and phase separation, a CO₂-rich-solution is depressurized and phase-separated into gas and liquid by a pressure reduction and phase separation unit and absorbs enthalpy of vaporization during vaporization, and thus, a heat capacity of the CO₂-rich-solution is increased. Accordingly, as enthalpy needed for preheating the CO₂-rich-solution to a certain temperature is increased, an amount of sensible heat recovered from a lean solution, discharged from a lower part of a stripping tower, is increased, and thus, an amount of sensible heat recovery is increased.

Additionally, as a part of the CO₂-rich-solution discharged from the absorption tower directly flows into an upper part of the stripping tower, a temperature of the stripping tower is maintained to be low, vapor pressure of an absorbent in the stripping tower is decreased, and thus, a re-liquefaction ratio and a cooling duty are reduced.

Additionally, as a cooling duty of a condenser is decreased and an amount of sensible heat recovered by the CO₂-rich-solution is increased, heat supplied by a reheater may be reduced. An amount of energy reduced by the reheater may be approximated as a sum of an amount of a reduction in re-liquefaction energy of the condenser and an amount of an increase in sensible recovery of the heat exchanger.

The carbon dioxide separation device may further include a splitter arranged in the first piping and configured to introduce a part of the CO₂-rich-solution into an upper part of the stripping tower and a remaining part of the CO₂-rich-solution to the pressure reduction and phase separation unit.

The pressure reduction and phase separation unit may include: a pressure control valve configured to depressurize the CO₂-rich-solution; and a heat exchanger configured to phase-separate the CO₂-rich-solution into gas and liquid when heat is exchanged between a lean solution and the CO₂-rich-solution.

The heat exchanger may be a kettle-type heat exchanger.

About 10% to 30% of the CO₂-rich-solution, discharged from the absorption tower, may be separated by the splitter and flow into the stripping tower.

About 20% of the CO₂-rich-solution, discharged from the absorption tower, may be separator by the splitter and flow into the stripping tower.

The pressure reduction and phase separation unit may include a pressure control valve configured to depressurize the CO₂-rich-solution; a heat exchanger configured to exchange heat between lean solution and the CO₂-rich-solution; and a gas-liquid separator connected to the heat exchanger and configured to phase-separate the CO₂-rich-solution, obtained after the heat is exchanged between the CO₂-rich-solution and the lean solution, into gas and liquid.

The gas-liquid separator may be a flash drum.

FIG. 1 is a schematic diagram of a liquid amine carbon capture and storage (CCS) process in a prior art;

FIG. 2 is a conceptual diagram of a carbon dioxide separation device having improved sensible heat recovery efficiency using pressure reduction and phase separation, according to an exemplary embodiment of the present invention;

FIG. 3 is a diagram illustrating an excerpt of a main part of the carbon dioxide separation device shown in FIG. 2; and

FIG. 4 is a conceptual diagram of a carbon dioxide separation device having improved sensible heat recovery efficiency using pressure reduction and phase separation, according to another exemplary embodiment.

The present invention relates to a carbon dioxide separation device having improved sensible heat recovery efficiency using pressure reduction and phase separation, (also referred to as the carbon dioxide separation) Hereinafter, the present invention will be described more fully with reference to the accompanying drawings, in which exemplary embodiments of the present invention are shown.

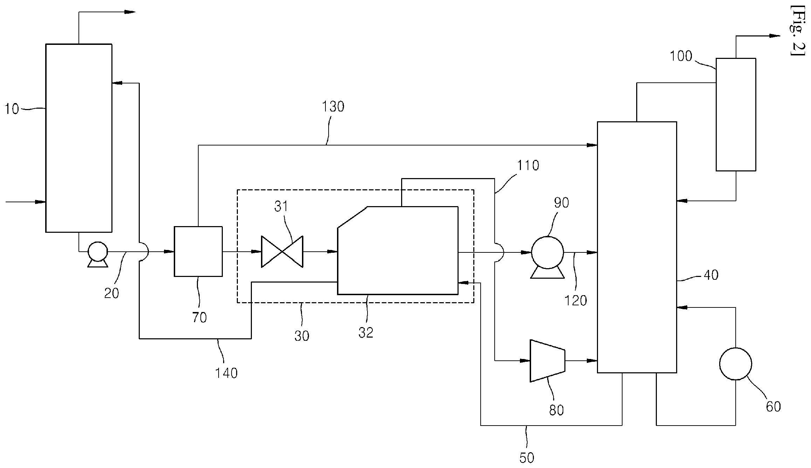

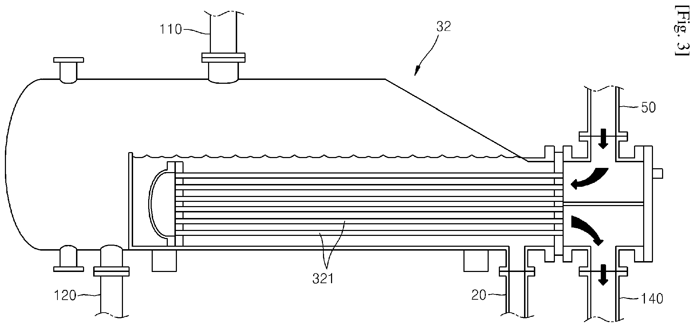

FIG. 2 is a conceptual diagram of a carbon dioxide separation device having improved sensible heat recovery efficiency using pressure reduction and phase separation, according to an exemplary embodiment of the present invention. FIG. 3 is a diagram illustrating an excerpt of a main part of the carbon dioxide separation device shown in FIG. 2.
Referring to FIG. 2, according to an exemplary embodiment of the present invention, the carbon dioxide separation device includes an absorption tower 10, a first piping 20, a pressure reduction and phase separation unit 30, a stripping tower 40, a second piping 50, and a reheater 60.

The present invention is applied to a field in which a CCS technology used to capture, compress, transport and store carbon dioxide is employed. For example, the present invention is used to separate carbon dioxide discharged from a thermoelectric power plant.
In detail, the present invention may be applied to a liquid amine (Amine) process of separating carbon dioxide in a thermoelectric power plant. The present invention is specified by a composition constituting the present invention, and application of the present invention is not limited to the liquid amine process.

The absorption tower 10 is a place into which exhaust gas flows. Carbon dioxide contained in the exhaust gas and an absorbent react with each other, thus forming a CO₂-rich-solution.

A well-known absorption tower in a related art is used as the absorption tower 10. For example, if a liquid amine CCS technology is applied to a coal-fired power plant, exhaust gas passes through an exhaust gas desulfurization (DeSOx), NOx removal (DeNOx), and dust collection facility, which is an exhaust gas pretreatment facility, and flows into the absorption tower 10.

In the current embodiment, exhaust gas that contains carbon dioxide flows into a lower part of the absorption tower 10. If a liquid absorbent is injected into an upper part of the absorption tower 10, the exhaust gas and the liquid absorbent flow in counter-current to each other and contact each other in gas and liquid states. Thus, carbon dioxide is absorbed into the liquid absorbent, and thus, a CO₂-rich-solution is formed.

The first piping 20 is a piping through which the CO₂-rich-solution, formed when the carbon dioxide and the liquid absorbent react with each other, moves. In the current embodiment, the first piping 20 extends from a lower part of the absorption tower 10. A temperature of the CO₂-rich-solution is maintained at about 40°C to 50°C.

The pressure reduction and phase separation unit 30 is arranged on the first piping 20. The pressure reduction and phase separation unit 30 depressurizes the CO₂-rich-solution, exchanges heat between the CO₂-rich-solution and a lean solution that is to be described later, and separates a phase of the CO₂-rich-solution into gas and liquid.

According to an embodiment described with reference to FIG. 2, the phase reduction and phase separation unit 30 includes a pressure control valve 31 and a heat exchanger 32.

The pressure control valve 31 is provided so as to depressurize the CO₂-rich-solution.

The CO₂-rich-solution is discharged from the lower part of the absorption tower 10, and flows into the heat exchanger 32 via the pressure control valve 31 under a pressure lower than a pressure when the CO₂-rich-solution is discharged from the lower part of the absorption tower 10. A well-known pressure control valve is used as the pressure control valve 31. Thus, a detailed description thereof is not provided here.

Since the CO₂-rich-solution is depressurized, vaporization of the CO₂-rich-solution is facilitated, a heat capacity required to vaporize the CO₂-rich-solution in the heat exchanger 32 is increased, and thus, an amount of sensible heat recovery is increased.

The heat exchanger 32 is provided so as to exchange heat between the lean solution derived from the stripping tower 40 that is to be described later and the CO₂-rich-solution. In the current embodiment, the heat exchanger 32 separates a phase of the CO₂-rich-solution into gas and liquid at a same time when the heat is exchanged between the lean solution and the CO₂-rich-solution.

Referring to FIG. 3, in the current embodiment, a kettle-type heat exchanger is employed as the heat exchanger 32 so as to perform a function of heat-exchange and a function of separating a phase into gas and liquid at a same time.

The kettle-type heat exchanger performs a function of heat exchange between the lean solution and the CO₂-rich-solution, such that the lean solution flows from the stripping tower 40 to a pipe 321 via the second piping 50, and then, exits along a sixth piping 140, and the CO₂-rich-solution flows into the heat exchanger 32 along the first piping 20 and absorbs heat from the lean solution to exchange sensible heat with the lean solution. A well-known configuration is employed for the kettle-type heat exchanger. The CO₂-rich-solution is heated to about 90°C to 100°C while the CO₂-rich-solution is passing through the heat exchanger 32.

Additionally, in the current embodiment, a CO₂-rich-solution having a phase changed into a gas state by the heat exchanger 32 (a CO₂-rich-solution in a gas state which is obtained when the heat exchanger 32 separates the phase of the CO₂-rich-solution into liquid and gas) flows into the stripping tower 40 along a third piping 110 connecting the heat exchanger 32 to the stripping tower 40.

The third piping 110 may include a compressor or a fan 80 for re-pressurizing the CO₂-rich-solution in the gas state. The CO₂-rich-solution in the gas state is re-pressurized by the compressor or fan 80, and then, flows into the stripping tower 40. The CO₂-rich-solution re-pressurized by the compressor or the fan 80 flows into the lower part of the stripping tower 40.

Additionally, in the current embodiment, a CO₂-rich-solution having a phase separated into a liquid state (a CO₂-rich-solution in a liquid state which is obtained when the heat exchanger 32 separates the phase of the CO₂-rich-solution into liquid and gas) flows into the stripping tower 40 along a fourth piping 120 connecting the heat exchanger 32 to the stripping tower 40.

The fourth piping 120 may include a pump 90 for re-pressurizing the CO₂-rich-solution in the liquid state. The CO₂-rich-solution in the liquid state is re-pressurized by the pump 90, and then, flows into the stripping tower 40. The CO₂-rich-solution re-pressurized by the pump 90 flows into a center part of the stripping tower 40.

If the CO₂-rich-solution in the gas state is repressurized by the compressor or the fan 80, the CO₂-rich-solution in the liquid state is repressurized by the pump 90, and thus, a temperature and a pressure of the CO₂-rich-solution in the gas state and in the liquid state are increased, and the CO₂-rich-solution in such states flow into the stripping tower 40, latent heat and sensible heat are provided to the stripping tower 40, and heat energy that is to be provided by the reheater 60 is reduced.

Additionally, since a temperature of the CO₂-rich-solution in the gas state, which was re-pressurized by the compressor or the fan 80, is increased more than a temperature of the CO₂-rich-solution in the liquid state, which was re-pressurized by pump (90), an operation efficiency of the stripping tower 40 may be improved by introducing the CO₂-rich-solution in the gas state into the lower part of the stripping tower 40 and introducing the CO₂-rich-solution in the liquid state into the center part of the stripping tower 40.

As described above, as the CO₂-rich-solution in the gas state and the CO₂-rich-solution in the liquid state flow into the stripping tower 40, carbon dioxide is separated from the CO₂-rich-solution.

Like the absorption tower 10, a configuration of a stripping tower in a related art may be used for the stripping tower 40. For example, if liquid amine CCS technology is applied to a coal-fired power plant, is heated by heat energy, and thus, carbon dioxide is separated from the CO₂-rich-solution that is an amine absorbent in the stripping tower 40, and the separated carbon dioxide is discharged to an upper part of the stripping tower 40. Lean solution obtained by separating the carbon dioxide from the CO₂-rich-solution is discharged to a lower part of the stripping tower 40, and flows into the heat exchanger 32.

The second piping 50 connects the stripping tower 40 to the pressure reduction and phase separation unit 30 so that the lean solution obtained by separating the carbon dioxide from the CO₂-rich-solution moves through the second piping 50. In detail, the second piping 50 connects the stripping tower 40 to the heat exchanger 32 constituting the pressure reduction and phase separation unit 30.

The second piping 30 extends from a lower part of the stripping tower 40. A temperature of the lean solution discharged to the lower part of the stripping tower 40 is maintained at about 105 °C to 115 °C. The lean solution flows into the heat exchanger 32, and exchange heat with the CO₂-rich-solution in the heat exchanger 32. Then, the lean solution flows into an upper part of the absorption tower 10 via the sixth piping 140.

The re-heater 40 provides heat so that the carbon dioxide is separated from the CO₂-rich-solution.

In the current embodiment, a part of an absorbent in the stripping tower 40 flows into the reheater 60, generates vapors while the part of the solution passes through the reheater 60, and then, circulates back to the stripping tower 40. And then, an absorbent helps to separate carbon dioxide. The carbon dioxide is separated from the CO₂-rich-solution by using heat energy supplied as described above.

According to an exemplary embodiment, the carbon dioxide separation device further includes a splitter 70.

The splitter 70 is arranged in the first piping 20 so as to introduce a part of the CO₂-rich-solution into an upper part of the stripping tower 40 and introduce a remaining part of the CO₂-rich-solution into the pressure reduction and phase separation unit 30.

In the current embodiment, the splitter 70 is arranged in the first piping 20 connecting a lower part of the absorption tower 10 to the pressure reduction and phase separation unit 30. A part of the CO₂-rich-solution, separated by the splitter 70, flows into an upper part of the stripping tower 40 via a fifth piping 130 so as to maintain the upper part of the stripping tower 40 at a low temperature, and a remaining part of the CO₂-rich-solution flows into the heat exchanger 32 via the pressure control valve 31.

In the current embodiment, desirably, about 10% to 30% of a CO₂-rich-solution, discharged from the absorption tower 10, may be separated by the splitter 70 so as to flow into the stripping tower 10. More desirably, about 20% of a CO₂-rich-solution, discharged from the absorption tower 10, may be separated by the splitter 70 so as to flow into the stripping tower 10.

If less than 10% of the CO₂-rich-solution is separated by the splitter 70, since an amount of the CO₂-rich-solution which is separated by the splitter 70 and flows into the upper part of the stripping tower 40 may be reduced, a re-liquefaction ratio may not be sufficiently decreased. (Referring to FIG.1, the re-liquefaction ratio refers to a ratio between moles of condensate that is liquefied and flows into the stripping tower and moles of CO₂ discharged from a condenser 4.) If more than 10% of the CO₂-rich-solution is separated by the splitter 70, since an amount of a CO₂-rich-solution that flows into the upper part of the stripping tower 40 via the splitter 70 may be reduced, sensible heat may not be sufficiently exchanged between the CO₂-rich-solution and the lean solution.

As described above, a temperature of the CO₂-rich-solution discharged to the lower part of the absorption tower 10 is low compared to that of the CO₂-rich-solution flowing into the stripping tower 40 via the heat exchanger 32.

The upper part of the stripping tower 40 is maintained at a low temperature by introducing the part of the CO₂-rich-solution discharged to the lower part of the absorption tower 10 to the upper part of the stripping tower 40 before the part of the CO₂-rich-solution passes through the pressure reduction and phase separation unit 30.

Based on such effects, a role of a condenser 100 installed at a rear end of the stripping tower 40 and configured to remove moisture from a high concentration of carbon dioxide may be reduced or excluded. In other words, a cooling duty on the condenser 100 is reduced. Hereinafter, according to an exemplary embodiment of the present invention, an operation performed by using the above-described configuration is described in detail.

Exhaust gas that contains carbon dioxide flows into the absorption tower 10. The carbon dioxide reacts with an absorbent, thus forming a CO₂-rich-solution. Then, the CO₂-rich-solution flows to a lower part of the absorption tower 10, and then, is discharged through the first piping 20. After the carbon dioxide is removed from the exhaust gas as the carbon dioxide reacts with the absorbent, the exhaust gas is discharged to an upper part of the absorption tower 10.

A part of the CO₂-rich-solution directly flows into the upper part of the stripping tower 40 by the splitter 70 arranged in the first piping 20, and thus, reduces a temperature inside the stripping tower 40. As the remaining part of the CO₂-rich-solution passes through the pressure reduction and phase separation unit 30, a remaining part of the CO₂-rich-solution is depressurized, heat is exchanged between a lean solution and the CO₂-rich-solution, and the CO₂-rich-solution is phase-separated into a gas state and a liquid state.

In detail, as the CO₂-rich-solution passes through the pressure control valve 31, the CO₂-rich-solution is depressurized and flows into the heat exchanger 32 with a lower pressure compared to when the CO₂-rich-solution is discharged to the lower part of the absorption tower 10.

After the CO₂-rich-solution flowed into the heat exchanger 32, heat is exchanged between a lean solution and the CO₂-rich-solution, and the CO₂-rich-solution is phase-separated into gas and liquid. In other words, the lean solution, from which carbon dioxide is separated and which is discharged from a lower part of the stripping tower 40, passes through the second piping 50 and is introduced into the heat exchanger 32. Then, the CO₂-rich-solution absorbs sensible heat from heat of the lean solution.

A CO₂-rich-solution that is changed into a gas state by the heat exchanger 32 (A CO₂-rich-solution in a gas state which is obtained when the heat exchanger 32 separates the phase of the CO₂-rich-solution into liquid and gas) is re-pressurized by the compressor or the fan 80 and introduced to a lower part of the stripping tower 40 via the third piping 110. A CO₂-rich-solution that is changed into a liquid state (A CO₂-rich-solution in a liquid state which is obtained when the heat exchanger 32 separates the phase of the CO₂-rich-solution into liquid and gas) is re-pressurized by the pump 90 and introduced to a center part of the stripping tower 40 via the fourth piping 120.

As the reheater 60 supplies heat to the CO₂-rich-solution in the stripping tower 40, a high concentration of carbon dioxide is separated from the CO₂-rich-solution, and the high concentration of carbon dioxide is discharged to the upper part of the stripping tower 40. Additionally, a lean solution obtained after carbon dioxide is separated from the CO₂-rich-solution is introduced to the heat exchanger 32 via the second piping 50 connected to the lower part of the stripping tower 40. The lean solution flows into the upper part of the absorption tower 10 via the heat exchanger 32.

According to an exemplary embodiment, the carbon dioxide separation device having improved sensible heat recovery efficiency using pressure reduction and phase separation may depressurize the CO₂-rich-solution, increase a heat capacity by separating a phase of the CO₂-rich-solution into gas and liquid, and improve efficiency of sensible heat absorption from the lean solution that is supplied via the stripping tower 40.

According to an exemplary embodiment, since a part of the CO₂-rich-solution, which is discharged to a lower part of the absorption tower 10, is separated by the splitter 70 and flows into the stripping tower 40, an amount of the CO₂-rich-solution flowing into the heat exchanger 32 is reduced. Thus, since the CO₂-rich-solution is depressurized, a heat capacity is increased and sensible heat recovery is improved.

[Table 1] shows a numerical comparison of amounts of sensible heat recovery with respect to the heat exchanger 32 between the present invention and a comparative process.

**[Table 1]**

| Classification | Comparative process | Exemplary embodiment of the present invention |
|---|---|---|
| A temperature (°C) of the CO₂-rich-solution after the CO₂-rich-solution passes through the heat exchanger | 95 | 95 |
| Heat exchange rate (MJ/hr) | 1251 | 261 |

[Table 1] shows a comparison between an exemplary embodiment of the present invention and the comparative process. According to an exemplary embodiment, about 80% of a CO₂-rich-solution discharged from a lower part of the absorption tower 10 is depressurized from 2 bars to 1 bar by using the pressure adjustment valve 31, and then, introduced into the heat exchanger 32. In the comparative process, a whole CO₂-rich-solution discharged from the lower part of the absorption tower 10 is directly introduced into the heat exchanger 32.

In both cases, the CO₂-rich-solution is preheated to 95°C. In the current embodiment, as vaporization occurs in the heat exchanger 32, a heat capacity is increased. Thus, sensible heat of about 10 MJ/hr (a value obtained by converting the increased heat capacity into Joule heat) is further recovered compared to the comparative process.

Additionally, [Table 2] shows a numerical comparison of a re-liquefaction ratio and an amount of reduced condensed energy with respect to the condenser 100 between the present invention and a comparative process.

**[Table 2]**

| Classification | Comparative Process | Exemplary embodiment of the present invention |
|---|---|---|
| A temperature in an upper part of the stripping tower | 98 | 45 |
| Re-liquefaction ratio with respect to the condenser | 0.5 | 0 |
| Cooling energy with respect to the condenser (MJ/hr) | 52 | 0 |

[Table 2] shows a comparison between an exemplary embodiment of the present invention and a comparative process. According to an exemplary embodiment, about 20% of a CO₂-rich-solution discharged from a lower part of the absorption tower 10 flows directly on the upper part of the stripping tower 40 via the splitter 70. In the comparative process, a whole CO₂-rich-solution discharged from the lower part of the absorption tower 10 flows into the stripping tower 50 via the heat exchanger 32. Additionally, [Table 2] shows a case when a final target temperature of the CO₂-rich-solution, to be cooled by the condenser 100, is set to 45°C.

According to an exemplary embodiment, as a cool CO₂-rich-solution flows directly into the upper part of the stripping tower 40, a temperature of the upper part of the stripping tower 40 is maintained at 45°C that is greatly lower than 98 °C in the comparative process. Accordingly, since a temperature of 45°C, which is a target temperature of the condenser 100, is already reached in the upper part of the stripping tower 40, the re-liquefaction ratio is greatly reduced from 0.5 to 0. Additionally, cooling energy (re-liquefaction energy) of the condenser 100 is greatly reduced from 52 MJ/hr to 0 MJ/hr.

In other words, in the comparative process, since a temperature of the upper part of the stripping tower 40 is 98°C, energy of 52 MJ/hr is needed to cool the temperature to 45°C that is the target temperature of the condenser 100. Whereas the re-liquefaction ratio is 0.5, a temperature of the upper part of the stripping tower 40 is already 45°C according to an exemplary embodiment, and thus, a re-liquefaction ratio of 0 is reached even when additional cooling energy is needed by the condenser 100.

Accordingly, it may be understood that cooling energy of the condenser 100 is greatly reduced. Accordingly, according to an exemplary embodiment, a load of the condenser 100 installed at a rear end of the stripping tower 40 may be reduced at maximum or the condenser 100 may not be operated.

In more detail, if a final target temperature to be reached by the condenser 100 is less than 45°C, since further cooling is needed at a temperature of 45°C in an upper part of the stripping tower 40, a cooling energy is required by the condenser 100. Even in this case, a load on the condenser 100 may still be greatly reduced compared to the comparative process when a temperature of an upper part of the stripping tower 40 is cooled from 98°C to a target temperature.

As shown in [Table 2], if the condenser 100 is to cool the upper part of the stripping tower 40 to a final target temperature of 45°C, since the target temperature is already reached in the upper part of the stripping tower 40, the condenser 100 may not have to be operated. An increase in an amount of sensible heat recovery in the heat exchanger 32 and a decrease in an amount of condensed energy of the condenser 100 indicate that heat energy introduced to the stripping tower 40 by the reheater 60 may be reduced. In other words, as shown in [Table 3] below, an amount of energy to be reduced by the reheater 60 may be approximated as a sum of an increased amount of sensible heat recovery in the heat exchanger 32 and a decreased amount of condensed energy of the condenser 100.

**[Table 3]**

| Classification | Comparative process | Exemplary embodiment |
|---|---|---|
| Heat efficiency of a reheater (MJ/hr) | 1289 | 1224 |

Since an increased amount of sensible heat recovery in the heat exchanger 32 is about 10 MJ/hr as shown in [Table 1], and a decreased amount of re-liquefaction energy in the condenser 100 is about 52MJ/hr as shown in [Table 2], a reduction in an amount of energy in the reheater 60 is expected to be about 62 MJ/hr. According to an exemplary embodiment, as shown in [Table 3] presenting simulation results, an energy amount in the reheater 60 is reduced by more than 65 MJ/hr compared to the comparative process. Accordingly, energy may be reduced by 23% in total.

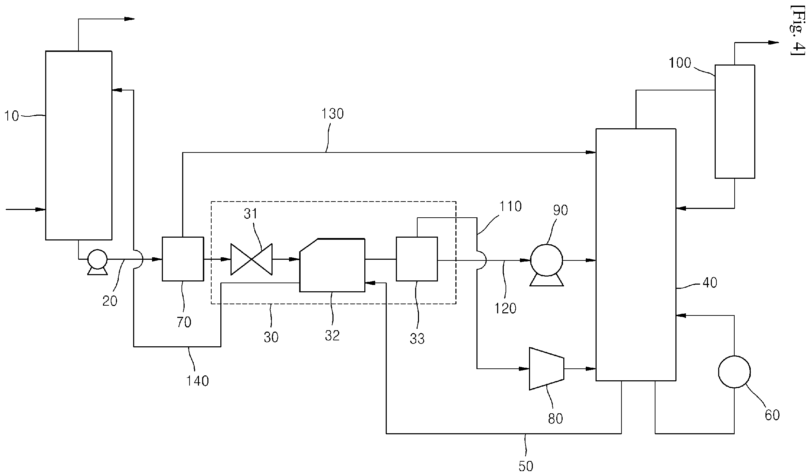

FIG. 4 illustrates a carbon dioxide separation device having improved sensible heat recovery efficiency using pressure reduction and phase separation, according to another exemplary embodiment.

According to an exemplary embodiment described with reference to FIG. 4, elements performing a same operation and function as those described according to an exemplary embodiment described with reference to FIG. 2 are provided with same reference numerals, and a detailed description thereof is not provided here again.

According to an exemplary embodiment described with reference to FIG. 4, a configuration of the pressure reduction and phase separation unit 30 is slightly different from that of the pressure reduction and phase separation unit 30 according to an exemplary embodiment described with reference to FIG. 2. Other configurations than that of the pressure reduction and phase separation unit 30 are identical to those of elements according to an exemplary embodiment described with reference to FIG. 2.

In the current embodiment, the pressure reduction and phase separation unit 30 includes a pressure control valve 31, a heat exchanger 32, and a gas-liquid separator 33. * In other words, according to an exemplary embodiment described with reference to FIG. 2, the heat exchanger 32 performs heat exchange and gas-liquid separation at a same time. However, according to an exemplary embodiment described with reference to FIG. 4, the heat exchanger 32 performs a heat-exchange function and the gas-liquid separator 33 separates a phase of a CO₂-rich-solution into gas and liquid.

The pressure control valve 31 is provided so as to depressurize a CO₂-rich-solution. Since the pressure control valve 31 according to an exemplary embodiment described with reference to FIG. 2 is employed as the pressure control valve 31 according to an exemplary embodiment described with reference to FIG. 4, Thus, a detailed description thereof is not provided here.

The heat exchanger 32 exchanges heat between a lean solution and the CO₂-rich-solution. The stripping tower 40 and the heat exchanger 32 are connected to each other via the second piping 50, and the lean solution is introduced to the heat exchanger 32 via the second piping 50.

A generally used heat exchanger may be used as the heat exchanger 32. For example, a shell-and-tube type heat exchanger, other than the kettle type heat exchanger, may be used. A well-known configuration is used as a configuration of the heat exchanger 32, and thus, a detailed description thereof is not provided here.

The gas-liquid separator 33 is connected to the heat exchanger 32, and separates a phase of the CO₂-rich-solution into gas and liquid. A well-known gas-liquid separator is used as the gas-liquid separator 33, and thus, a detailed description thereof is not provided here. For example, a flash drum may be used as the gas-liquid separator 33.

In the current embodiment, a CO₂-rich-solution having a phase separated into gas by the gas-liquid separator 33 is introduced into a lower part of the stripping tower 40 along the third piping 110. A CO₂-rich-solution having a phase separated into liquid is introduced into a center part of the stripping tower 40 along the fourth piping 120.

Like an exemplary embodiment described with reference to FIG. 2, the compressor or the fan 80 is installed in the third piping 110. The CO₂-rich-solution in the gas state is repressurized by the compressor or the fan 80, and then, introduced to the lower part of the stripping tower 40.

The pump 90 is installed in the fourth piping 120. The CO₂-rich-solution in a liquid state is repressurized by the pump 90, and then, introduced to the center part of the stripping tower 40 along the fourth piping 120. Operations and effects of the compressor or the fan 80, or the pump 90 are already described above, and thus, a description thereof is not provided here again.

According to an exemplary embodiment described with reference to FIG. 4, a carbon dioxide separation device having improved sensible heat recovery efficiency using pressure reduction and phase separation provides a same effect as described with reference to an exemplary embodiment described with reference to FIG. 2. Thus, a description thereof is not provided here again.

The present invention has been described more fully with reference to the accompanying drawings, in which exemplary embodiments of the inventive concept are shown. The inventive concept may, however, be embodied in many different forms and should not be construed as being limited to the embodiments set forth herein. It will be understood by those skilled in the art that various changes in form and details may be made therein without departing from the spirit and scope of the inventive concept as defined by the appended claims.

For example, even though the condenser 100 is shown in FIG. 2, the condenser 100 may not be provided as necessary. Additionally, even though a reference numeral 80 shown in FIG. 2 denotes the fan 80, a compressor (not shown) may be provided instead of the fan 80 as described above.

## Claims

1. A carbon dioxide separation device comprising:
an absorption tower (10) into which an exhaust gas flows and configured to cause carbon dioxide, included in the exhaust gas, and an absorbent to react with each other;
a first piping (20) through which a CO₂-rich-solution, obtained when the carbon dioxide and the absorbent reacted with each other, moves;
a pressure reduction and phase separation unit (30) arranged on the first piping (20) and configured to depressurize at least a part of the CO₂-rich-solution, and cause heat exchange between a lean solution and the depressurized CO₂-rich-solution and separate the CO₂-rich-solution into phases of a gas state and a liquid state; a stripping tower (40) into which the CO₂-rich-solution in the gas state and the CO₂-rich-solution in the liquid state flow and configured to separate carbon dioxide from the CO₂-rich-solution;
a second piping (50) configured to connect the stripping tower (40) to the pressure reduction and phase separation unit so that the lean solution, obtained when the carbon dioxide is separated from the CO₂-rich-solution, moves through the second piping (50); and
a reheater (60) configured to heat the stripping tower (40) so that carbon dioxide is separated from the CO₂-rich-solution,
wherein the lean solution flows into the pressure reduction and phase separation unit (30), and the CO₂-rich-solution undergoes the phase separation into the gas state and the liquid state due to heat of the lean solution, and then, flows into the stripping tower (40), wherein the CO₂-rich-solution changed into the gas state is repressurized by a compressor or a fan and flows into the stripping tower (40), and wherein the CO₂ rich solution remaining in the liquid state is repressurized by a pump (90) and flows into the stripping tower (40), **characterized in that** the CO₂-rich-solution repressurized by the compressor or the fan flows into the lower part of the stripping tower (40), and
the CO₂-rich-solution repressurized by the pump flows into the center part of the stripping tower (40).

2. The carbon dioxide separation device of claim 1, further comprising:
a splitter (70) arranged in the first piping (20) and configured to introduce a part of the CO₂-rich-solution into an upper part of the stripping tower (40) and a remaining part of the CO₂-rich-solution to the pressure reduction and phase separation unit (30).

3. The carbon dioxide separation device of claim 1, wherein the pressure reduction and phase separation unit (30) comprises:
a pressure control valve (31) configured to depressurize the CO₂-rich-solution; and
a heat exchanger (32) configured to phase-separate the CO₂-rich-solution into gas and liquid when heat is exchanged between a lean solution and the CO₂-rich-solution.

4. The carbon dioxide separation device of claim 3, wherein the heat exchanger is a kettle-type heat exchanger (32).

5. The carbon dioxide separation device of claim 2, wherein about 10% to 30% of the CO₂-rich-solution, discharged from the absorption tower (10), is separated by the splitter (70) and flows into the stripping tower (40).

6. The carbon dioxide separation device of claim 5, wherein about 20% of the CO₂-rich-solution, discharged from the absorption tower (10), is separated by the splitter (70) and flows into the stripping tower (40).

7. The carbon dioxide separation device of claim 1, wherein the pressure reduction and phase separation unit (30) comprises:
a pressure control valve (31) configured to depressurize the CO₂-rich-solution;
a heat exchanger (32) configured to exchange heat between lean solution and the CO₂-rich-solution; and
a gas-liquid separator (33) connected to the heat exchanger (32) and configured to phase-separate the CO₂-rich-solution, obtained after the heat is exchanged between the CO₂-rich-solution and the lean solution, into gas and liquid.

8. The carbon dioxide separation device of claim 7, wherein the gas-liquid separator (33) is a flash drum.

## Patentansprüche

1. Kohlendioxid-Abscheidevorrichtung, umfassend:
einen Absorptionsturm (10), in den ein Abgas strömt und der konfiguriert ist, um zu veranlassen, dass Kohlendioxid, das in dem Abgas enthalten ist, und ein Absorptionsmittel miteinander reagieren;
eine erste Rohrleitung (20), durch die sich eine CO₂-reiche Lösung bewegt, die erhalten wird, wenn das Kohlendioxid und das Absorptionsmittel miteinander reagiert haben;
eine Druckreduzierungs- und Phasentrennungseinheit (30), die auf der ersten Rohrleitung (20) angeordnet ist und konfiguriert ist, um den Druck in mindestens einem Teil der CO₂-reichen Lösung zu verringern, und um einen Wärmeaustausch zwischen einer mageren Lösung und der druckverringerten CO₂-reichen Lösung zu verursachen und um die CO₂-reiche Lösung in Phasen eines Gaszustandes und eines Flüssigzustandes zu trennen;
einen Strippturm (40), in den die CO₂-reiche Lösung in dem Gaszustand und die CO₂-reiche Lösung in dem Flüssigzustand strömen und der konfiguriert ist, um Kohlendioxid von der CO₂-reichen Lösung zu trennen;
eine zweite Rohrleitung (50), die konfiguriert ist, um den Strippturm (40) mit der Druckreduzierungs- und Phasentrennungseinheit zu verbinden, sodass sich die magere Lösung, die erhalten wird, wenn das Kohlendioxid von der CO₂-reichen Lösung getrennt wird, durch die zweite Rohrleitung (50) bewegt; und
einen Nacherwärmer (60), der konfiguriert ist, um den Strippturm (40) zu erwärmen, sodass Kohlendioxid von der CO₂-reichen Lösung getrennt ist,
wobei die magere Lösung in die Druckreduzierungs- und Phasentrennungseinheit (30) strömt und die CO₂-reiche Lösung die Phasentrennung in den Gaszustand und den Flüssigkeitszustand aufgrund der Wärme der mageren Lösung durchläuft und dann in den Strippturm (40) strömt,
wobei
die CO₂-reiche Lösung, die in den Gaszustand gewandelt wurde, durch einen Kompressor oder einen Lüfter erneut mit Druck versehen wird und in den Strippturm (40) strömt,
und wobei die CO₂-reiche Lösung, die in dem Flüssigkeitszustand bleibt, durch eine Pumpe (90) erneut mit Druck versehen ist und in den Strippturm (40) strömt, **dadurch gekennzeichnet, dass** die CO₂-reiche Lösung, die durch den Kompressor oder den Lüfter erneut mit Druck versehen ist, in den unteren Teil des Strippturms (40) strömt,
wobei die CO₂-reiche Lösung, die durch die Pumpe erneut mit Druck versehen wird, in den mittleren Teil des Strippturms (40) strömt.

2. Kohlendioxid-Abscheidevorrichtung nach Anspruch 1, ferner umfassend:
einen Splitter (70), der in der ersten Rohrleitung (20) angeordnet ist und konfiguriert ist, um einen Teil der CO₂-reichen Lösung in einen oberen Teil des Strippturms (40) und einen Rest der CO₂-reichen Lösung zu der Druckreduzierungs- und Phasentrennungseinheit (30) einzuführen.

3. Kohlendioxid-Abscheidevorrichtung nach Anspruch 1, wobei die Druckreduzierungs- und Phasentrennungseinheit (30) Folgendes umfasst:
ein Drucksteuerventil (31), das konfiguriert ist, um den Druck in der CO₂-reichen Lösung zu verringern; und
einen Wärmetauscher (32), der konfiguriert ist, um bei der CO₂-reichen Lösung eine Phasentrennung in Gas und Flüssigkeit vorzunehmen, wenn Wärme zwischen einer mageren Lösung und der CO₂-reichen Lösung ausgetauscht wird.

4. Kohlendioxid-Abscheidevorrichtung nach Anspruch 3, wobei der Wärmetauscher ein Wärmetauscher des Kesseltyps (32) ist.

5. Kohlendioxid-Abscheidevorrichtung nach Anspruch 2, wobei etwa 10 % bis 30 % der CO₂-reichen Lösung, die von dem Absorptionsturm (10) abgeführt ist, durch den Splitter (70) getrennt sind und in den Strippturm (40) strömen.

6. Kohlendioxid-Abscheidevorrichtung nach Anspruch 5, wobei etwa 20 % der CO₂-reichen Lösung, die von dem Absorptionsturm (10) abgeführt ist, durch den Splitter (70) getrennt sind und in den Strippturm (40) strömen.

7. Kohlendioxid-Abscheidevorrichtung nach Anspruch 1, wobei die Druckreduzierungs- und Phasentrennungseinheit (30) Folgendes umfasst:
ein Drucksteuerventil (31), das konfiguriert ist, um den Druck in der CO₂-reichen Lösung zu verringern;
einen Wärmetauscher (32), der konfiguriert ist, um Wärme zwischen der mageren Lösung und der CO₂-reichen Lösung auszutauschen; und
einen Gas-Flüssigkeits-Trenner (33), der mit dem Wärmetauscher (32) verbunden ist und konfiguriert ist, um bei der CO₂-reichen Lösung, die erhalten wird, nachdem Wärme zwischen der CO₂-reichen Lösung und der mageren Lösung ausgetauscht ist, eine Phasentrennung in Gas und Flüssigkeit vorzunehmen.

8. Kohlendioxid-Abscheidevorrichtung nach Anspruch 7, wobei der Gas-Flüssigkeits-Trenner (33) eine Flash-Trommel ist.

## Revendications

1. Dispositif de séparation du dioxyde de carbone comprenant :
une colonne d'absorption (10) dans laquelle un gaz d'échappement s'écoule et conçue pour amener le dioxyde de carbone, compris dans le gaz d'échappement, et un absorbant à réagir l'un avec l'autre ;
une première canalisation (20) à travers laquelle une solution riche en CO₂, obtenue lorsque le dioxyde de carbone et l'absorbant ont réagi l'un avec l'autre, se déplaçant ;
une unité de réduction de pression et de séparation de phase (30) disposée sur la première canalisation (20) et conçue pour dépressuriser au moins une partie de la solution riche en CO₂ et entraîner un échange thermique entre une solution pauvre et la solution riche en CO₂ dépressurisée et séparer la solution riche en CO₂ en phases d'un état gazeux et d'un état liquide ;
une colonne de rectification (40) dans laquelle la solution riche en CO₂ à l'état gazeux et la solution riche en CO₂ à l'état liquide s'écoulent et conçue pour séparer le dioxyde de carbone de la solution riche en CO₂ ;
une deuxième canalisation (50) conçue pour relier la colonne de rectification (40) à l'unité de réduction de pression et de séparation de phase de manière que la solution pauvre, obtenue lorsque le dioxyde de carbone est séparé de la solution riche en CO₂, traverse la deuxième canalisation (50) ; et
un réchauffeur (60) conçu pour chauffer la colonne de rectification (40) de manière que le dioxyde de carbone est séparé de la solution riche en CO₂,
dans lequel la solution pauvre s'écoule dans l'unité de réduction de pression et de séparation de phase (30), et la solution riche en CO₂ subit la séparation de phase en étant gazeux et état liquide en raison de la chaleur de la solution pauvre, et puis, s'écoule dans la colonne de rectification (40),
dans lequel la solution riche en CO₂ transformée en état gazeux est remise sous pression par un compresseur ou un ventilateur et s'écoule dans la colonne de rectification (40),
et dans lequel la solution riche en CO₂ restant à l'état liquide est remise sous pression par une pompe (90) et s'écoule dans la colonne de rectification (40), **caractérisé en ce que**
la solution riche en CO₂ remise sous pression par le compresseur ou le ventilateur s'écoule dans la partie inférieure de la colonne de rectification (40),
la solution riche en CO₂ remise sous pression par la pompe s'écoule dans la partie centrale de la colonne de rectification (40).

2. Dispositif de séparation du dioxyde de carbone selon la revendication 1, comprenant en outre :
un diviseur (70) disposé dans la première canalisation (20) et conçu pour introduire une partie de la solution riche en CO₂ dans une partie supérieure de la colonne de rectification (40) et une partie restante de la solution riche en CO₂ dans l'unité de réduction de pression et de séparation de phase (30).

3. Dispositif de séparation du dioxyde de carbone selon la revendication 1, dans lequel l'unité de réduction de pression et de séparation de phase (30) comprend :
une soupape de régulation de pression (31) conçue pour dépressuriser la solution riche en CO₂ ; et
un échangeur thermique (32) conçu pour séparer en phases la solution riche en CO₂ en gaz et liquide lorsque la chaleur est échangée entre une solution pauvre et la solution riche en CO₂.

4. Dispositif de séparation du dioxyde de carbone selon la revendication 3, dans lequel l'échangeur thermique est un échangeur thermique de type bouilloire (32).

5. Dispositif de séparation du dioxyde de carbone selon la revendication 2, dans lequel environ 10 % à 30 % de la solution riche en CO₂, évacuée depuis la colonne d'absorption (10), est séparée par le diviseur (70) et s'écoule dans la colonne de rectification (40).

6. Dispositif de séparation du dioxyde de carbone selon la revendication 5, dans lequel environ 20 % de la solution riche en CO₂, évacuée depuis la colonne d'absorption (10), est séparée du diviseur (70) et s'écoule dans la colonne de rectification (40).

7. Dispositif de séparation du dioxyde de carbone selon la revendication 1, dans lequel l'unité de réduction de pression et de séparation de phase (30) comprend :
une soupape de régulation de pression (31) conçue pour dépressuriser la solution riche en CO₂ ;
un échangeur thermique (32) conçu pour échanger la chaleur entre la solution pauvre et la solution riche en CO₂ ; et
un séparateur de gaz-liquide (33) relié à l'échangeur thermique (32) et conçu pour séparer en phases la solution riche en CO₂, obtenue après que la chaleur a été échangée entre la solution riche en CO₂ et la solution pauvre, en gaz et liquide.

8. Dispositif de séparation du dioxyde de carbone selon la revendication 7, dans lequel le séparateur de gaz-liquide (33) est un ballon de détente.
